# EUROPEAN PATENT SPECIFICATION

(11) **EP 0 351 108 B1**
(45) Date of publication and mention of the grant of the patent: **02.02.1994**
(21) Application number: 89306650.6
(22) Date of filing: 30.06.1989
(51) Int. Cl.: G02F 1/1335

(54) **Display device**
Anzeigevorrichtung
Dispositif de visualisation

(30) Priority: 15.07.1988 GB 8816952
(43) Date of publication of application: 17.01.1990
(73) Proprietor: THORN EMI plc, London W1A 2AY (GB)
(72) Inventor: Green, Bernard Jeffrey, Harrow Middlesex (GB)
(74) Representative: Hurst, Richard Arthur Alexander

(56) References cited:
- EP-A- 0 172 615
- US-A- 3 497 686
- US-A- 3 863 246
- MACHINE DESIGN, vol. 31, no. 22, 29th October 1959, pages 94-103; A.M. BLUMENFELD et al.: "Parts that glow. Design techniques for controlling light in illuminated acrylic plastic parts"

## Description

The present invention relates to a liquid crystal device, comprising a liquid crystal panel and backlighting means to illuminate the panel from the rear, the backlighting means comprising a body of light transmissive material provided with a light input region of prismatic form and a plurality of light sources adjacent said region for inputting light to the said region.

In a known such device disclosed in US-A-3 863 246, the light transmissive material is in the form of a five sided prism, two faces of which have lamps inputting light in direct line of sight of the liquid crystal panel.

Another device disclosed in EP-A-172 615 uses two sources at opposite edges of a light transmissive sheet with no prismatic light input region.

In another device disclosed in US-A-3 497 686 the light transmissive material is in the form of a sheet and the light is supplied to facets at the edge of the sheet by a number of point light sources spaced along one edge. In this device the light sources all have the same chromatic output.

All object of the present invention is to provide improved uniformity of back illumination.

Another object of the present invention is to provide a thin back illumination unit.

According to the present invention there is provided a liquid crystal device comprising a liquid crystal panel and backlighting means to illuminate the panel from the rear, the backlighting means comprising a body of light transmissive material provided with a light input region of prismatic form and a plurality of light sources adjacent said region for inputting light to the said region characterized in that the said body is in the form of a sheet having a major surface facing the said panel, the light input region is located at an edge of the said sheet, the prismatic form of the light input region is such that the mathematical generators of its surface are substantially parallel to the said edge, and the light sources of the plurality are elongate, are positioned in direct line of sight of said light input region, extend substantially parallel to the said mathematical generators, overlap in a direction substantially perpendicular to the said mathematical generators, and are constructed to input light of respective different colours to said region.

The prismatic region enables each of the plurality of light sources to input light efficiently into the backlighting means and so to provide improved uniformity of illumination.

The prismatic region may be provided with two facets which are at an acute angle to each other and which converge from respective major faces of a plane parallel portion of the sheet to meet at an apex.

As an alternative, the region may be provided with two facets which diverge from respective major surfaces of a plane parallel portion of the sheet to adjoin a third facet which is perpendicular to the said portion.

The backlighting means may comprise a sheet of light transmitting material integral with the prismatic region, and formed for example by casting or moulding, optionally with appropriate additional abrading or cutting.

In order that the invention may more readily be understood, a description is now given by way of example only, reference being made to the accompanying drawings, in which:-
Figure 1 is a cross-sectional view of part of a display embodying the present invention; and
Figure 2 is a perspective view of part of another display embodying the present invention.

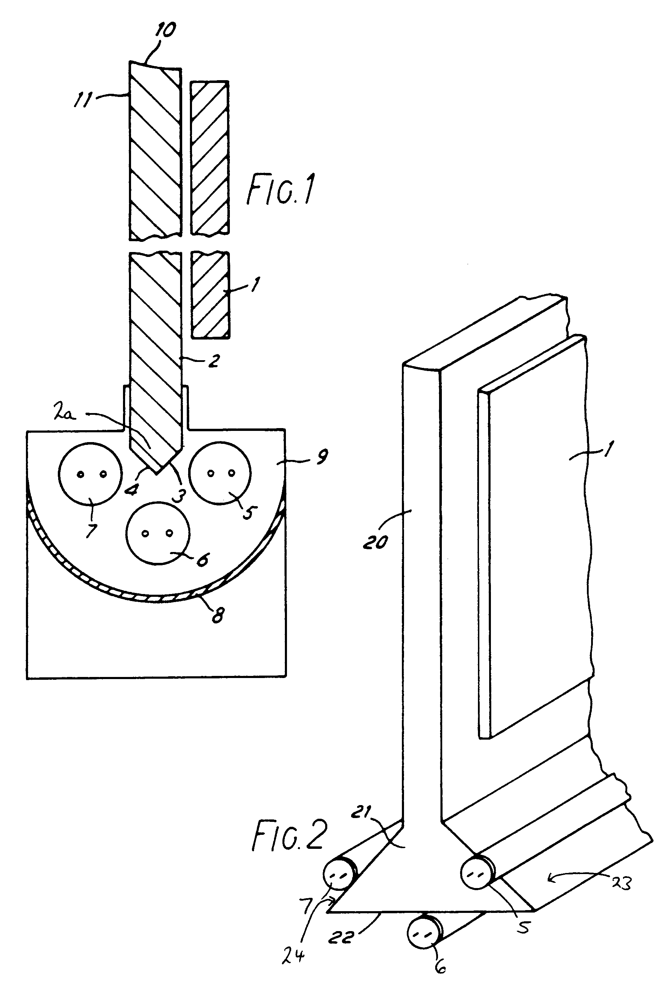

In Figure 1, a liquid crystal display panel 1 has a backlight plate 2 formed of a perspex sheet of dimensions 145mm x 110mm and 15mm thickness which has, at one edge, two faces 3 and 4 which meet at an apex to define an angle of 45°, thereby forming a prism 2a. Other light transmitting materials which may be used include glass (though this is relatively heavy), clear polystyrene, polycarbonate and transparent acrylic. Three fluorescent tubes 5, 6 and 7 (to output red light, green light and blue light respectively) of diameter about 15 to 16mm are located adjacent the faces 3 and 4 such that the longitudinal axes of the tubes lie on a cylindrical plane centered on the apex and with a radius of approximately 15mm (but which may be dependent on the diameter of the tubes 5, 6, 7); the axes of tubes 5 and 7 are diametrically opposite on the cylindrical plane, while the axis of tube 6 is half-way between them on the cylindrical plane. Thus, each of the tubes 5, 6 and 7 con input light into plate 2 efficiently and such as to provide substantially the same illumination of the panel 1. An aluminium sheet of semi-cylindrical shape having a radius of curvature of about 30mm and painted white internally acts as a reflector 8 common to all the tubes. An end cap 9 of a suitable plastics material (for example ptfe or polythene) is located at, and engages with, each end of reflector 8; the end cap 9 also engage with the plate 2 and the ends of the tubes to ensure their correct relative positioning.

Edge 10 of plate 2 has a concave curvature (arc radius of 36mm) and a mirror coating such as to direct light, emanating from the tubes, onto the back surface 11 of plate 2 which has multiple coats of white enamel paint to provide effective diffuse forward reflection of light. A coating of aluminium may be provided on the white coating to reflect any light transmitted through the white coating back into the plate 2.

Plate 2 can be manufactured by casting or molding such as to incorporate the shapes of the faces 3 and 4 and of edge 10; alternatively, these shapes can be formed by appropriate cutting, abrading and/or other mechanical operations. The mirror surface on edge 10 can be achieved by polishing, aluminising a layer of 2000 A and lacquering or alternatively by the application of self-adhesive aluminium tape.

Figure 2 shows another arrangement for the back illumination of liquid crystal panel 1, the principal difference being in that the backlighting plate 20 is shaped to form, along one edge, an elongate prism 21 whose base 22 is positioned remote from the main planar section of the plate 20 adjacent panel 1. The base 22 is coated with a thin oxide film or dichroic mirror to act as a dielectric colour separating mirror so constituted that it transmits the emission from the green fluorescent tube 6 underneath it and reflects the emissions passing though the faces 23, 24 from the red and blue tubes 5 and 7 which are placed at an angle of 45^{o} with it.

Plate 20 has an edge 10 and surface 11 as in similar fashion to those of plate 2, and can be provided with a reflector and end cap similar to those of plate 2. It is envisaged that a reflector would be provided for each tube 5, 6, 7 of the backlighting means in this embodiment.

## Claims

1. A liquid crystal device comprising a liquid crystal panel and backlighting means to illuminate the panel from the rear, the backlighting means comprising a body of light-transmissive material provided with a light input region of prismatic form and a plurality of light sources adjacent said region for inputting light to the said region, characterized in that the said body is in the form of a sheet having a major surface facing the said panel, the light input region is located at an edge of the said sheet, the prismatic form of the light input region is such that the mathematical generators of its surface are substantially parallel to the said edge, and the light sources of the plurality are elongate, are positioned in direct line of sight of said light input region, extend substantially parallel to the said mathematical generators, overlap in a direction substantially perpendicular to the said mathematical generators, and are constructed to input light of respective different colours to said region.

2. A device as claimed in Claim 1 wherein the light input region has two facets which are at an acute angle to each other and which converge from respective major surfaces of the sheet to meet at an apex.

3. A device as claimed in Claim 1 wherein said region has first and second facets which diverge from respective major surfaces of a plane parallel portion of the sheet to adjoin a third facet which is perpendicular to said portion, first, second and third said light sources being positioned in direct line of sight of the first, second and third facets respectively and the third facet being provided with a dichroic mirror for transmitting light from the third source and reflecting light from the first and second sources.

4. A device as claimed in any preceding claim wherein the light input region is integral with the sheet.

5. A device as claimed in any preceding claim wherein the sheet has a further edge, remote from the first edge, which has a concave curvature as viewed from outside the sheet, the further edge being provided with a reflective surface to direct light from the sheet back into the sheet.

## Patentansprüche

1. Flüssigkristall-Vorrichtung mit einer Flüssigkristall-Platte und Hintergrundbeleuchtungsmitteln zur Beleuchtung der Platte von hinten, wobei die Hintergrundbeleuchtungsmittel einen Körper aus lichtdurchlässigem Material umfassen, der mit einem Lichteintrittsbereich von prismatischer Form und einer Vielzahl von Lichtquellen neben dem Bereich versehen ist, um Licht in den Bereich einzugehen, dadurch gekennzeichnet, daß der Körper die Form einer Tafel hat, von der eine Hauptfläche der Platte zugekehrt ist, daß der Lichteintrittsbereich sich an einem Rand der Tafel befindet, daß die prismatische Form des Lichteintrittsbereichs so ist, daß die mathematisch Erzeugenden ihrer Oberfläche etwa parallel zu dem Rand verlaufen, und daß die Lichtquellen der Vielzahl länglich sind, in direkter Sichtlinie des Lichteintrittsbereichs angeordnet sind, sich etwa parallel zu den mathematisch Erzeugenden erstrecken, sich in einer Richtung etwa senkrecht zu den mathematisch Erzeugenden überlappen und so ausgebildet sind, daß sie Licht mit jeweils unterschiedlichen Farben in den Bereich eingeben.

2. Vorrichtung nach Anspruch 1, bei der der Lichteintrittshereich zwei Facetten hat, die einen spitzen Winkel miteinander bilden, und die von entsprechenden Hauptflächen der Tafel konvergieren, um sich an einem Scheitel zu treffen.

3. Vorrichtung nach Anspruch 1, bei der der Bereich erste und zweite Facetten hat, die von entsprechenden Hauptflächen eines planparallelen Teiles der Tafel divergieren, um an eine dritte Facette anzugrenzen, die senkrecht zu dem Teil verläuft, wobei eine erste, eine zweite und eine dritte Lichtquelle in direkter Sichtlinie zu der ersten, der zweiten und der dritten Facette angeordnet sind, und wobei die dritte Facette mit einem dichroitischen Spiegel versehen ist, um Licht von der dritten Quelle durchzulassen und Licht von der ersten und zweiten Quelle zu reflektieren.

4. Vorrichtung nach einem der vorhergehenden Ansprüche, bei der der Lichteintrittsbereich mit der Tafel ein Teil bildet.

5. Vorrichtung nach einem der vorhergehenden Ansprüche, bei der die Tafel einen weiteren Rand hat, der dem ersten Rand abgekehrt ist, der von außerhalb der Tafel gesehen eine konkave Krümmung besitzt, wobei der weitere Rand mit einer reflektierenden Oberfläche vershen ist, um Licht von der Tafel zurück in die Tafel zu leiten.

## Revendications

1. Dispositif à cristaux liquides comprenant un écran à cristaux liquides et un moyen d'éclairage arrière pour éclairer l'écran depuis l'arrière, le moyen d'éclairage arrière comprenant un corps en un matériau laissant passer la lumière muni d'une région d'entrée de lumière d'une forme prismatique et d'une pluralité de sources de lumière adjacentes à ladite région pour faire entrer de la lumière sur ladite région, caractérisé en ce que ledit corps se présente sous la forme d'une feuille comportant une surface principale faisant face audit écran, la région d'entrée de lumière est située au niveau d'un bord de ladite feuille, la forme prismatique de la région d'entrée de lumière est telle que les génératrices mathématiques de sa surface sont sensiblement parallèles audit bord et les sources de lumière de la pluralité de sources de lumière sont allongées, sont positionnées en ligne de visée directe de ladite région d'entrée de lumière, s'étendent sensiblement parallèlement auxdites génératrices mathématiques, sont en chevauchement suivant une direction sensiblement perpendiculaire auxdites génératrices mathématiques et sont construites pour faire entrer de la lumière de couleurs respectives différentes sur ladite région.

2. Dispositif selon la revendication 1, dans lequel la région d'entrée de lumière comporte deux facettes qui forment un angle aigu l'une par rapport à l'autre et qui convergent depuis des surfaces principales respectives de la feuille pour se rencontrer au niveau d'un apex.

3. Dispositif selon la revendication 1, dans lequel ladite région comporte des première et seconde facettes qui divergent depuis des surfaces principales respectives d'une partie parallèle plane de la feuille pour se joindre à une troisième face qui est perpendiculaire à ladite partie, des première, seconde et troisième desdites sources de lumière étant respectivement positionnées selon une ligne de visée directe des première, seconde et troisième facettes et la troisième facette étant munie d'un miroir dichroïque pour laisser passer la lumière en provenance de la troisième source et pour réfléchir la lumière en provenance des première et seconde sources.

4. Dispositif selon l'une quelconque des revendications précédentes, dans lequel la région d'entrée de lumière est d'un seul tenant avec la feuille.

5. Dispositif selon l'une quelconque des revendications précédentes, dans lequel la feuille comporte un autre bord éloigné du premier, lequel présente une courbure concave telle que vue depuis l'extérieur de la feuille, l'autre bord étant muni d'une surface réfléchissante pour diriger la lumière en provenance de la feuille en retour dans la feuille.
